# EUROPEAN PATENT APPLICATION

(11) **EP 4 357 612 A1**
(43) Date of publication of application: **24.04.2024**
(21) Application number: 22202694.0
(22) Date of filing: 20.10.2022
(51) Int. Cl.: F03D 13/40

(54) **TRANSPORTATION SYSTEM FOR COMPONENTS FOR AT LEAST ONE WIND TURBINE, ADAPTER ELEMENT, KIT AND METHOD FOR BUILDING UP A TRANSPORTATION SYSTEM**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

The transportation system comprises a lower transport frame (22, 32) for a component for a wind turbine, an auxiliary element (23,33) placed horizontally next to the lower transport frame, an adapter element (10, 11) placed onto the pair of the lower transport frame and the auxiliary element and an upper transport frame (21, 31) for a component for a wind turbine. The upper transport frame is placed onto the adapter element so that the adapter element is arranged vertically between the upper transport frame and the pair of the lower transport frame and the auxiliary element. The adapter element comprises first connection means (1a, 1b) with the help of which it is connected to the upper transport frame, second connection means (2a, 2b) with the help of which it is connected to the lower transport frame and third connection means (3a, 3b) with the help of which it is connected to the auxiliary element. The adapter element distributes a load from the upper transport frame to the lower transport frame and to the auxiliary element so that the load is diverted downwards via the lower transport frame and the auxiliary element.

## Description

A transportation system for components for at least one wind turbine is specified. Furthermore, an adapter element, a kit and a method for building up a transportation system are specified.

One object to be achieved is to provide an improved transportation system for components for at least one wind turbine, for example a transportation system with which several such components can be safely transported stacked above each other. A further object to be achieved is to provide an adapter element for such a transportation system as well as a kit for such a transportation system. Yet another object to be achieved is to provide a method for building up such a transportation system.

First, the transportation system for components for at least one wind turbine is specified. The components are, in particular, heavy components each having, for example, a mass of at least 1000 kg. For example, the components are rotor blades or towers or tower sections.

In at least one embodiment, the transportation system comprises a lower transport frame for a component for a wind turbine, an auxiliary element placed horizontally next to the lower transport frame, an adapter element placed onto the pair of the lower transport frame and the auxiliary element and an upper transport frame for a component for a wind turbine. The upper transport frame is placed onto the adapter element so that the adapter element is arranged vertically between the upper transport frame and the pair of the lower transport frame and the auxiliary element. The adapter element comprises first connection means with the help of which it is connected to the upper transport frame, second connection means with the help of which it is connected to the lower transport frame and third connection means with the help of which it is connected to the auxiliary element. The adapter element distributes a load from the upper transport frame to the lower transport frame and to the auxiliary element so that the load is diverted downwards via the lower transport frame and the auxiliary element.

Due to the adapter element being connected to the pair made of the lower transport frame and of the auxiliary element, more transport frames than usual and, accordingly, more components for wind turbines than usual, can be stacked above each other. This is because the auxiliary element provides additional stability and absorbs part of the forces which normally would have to be absorbed solely by the lower transport frame. The adapter element thereby guarantees that the load from the upper transport frame, particularly the gravitation load from the upper transport frame, is distributed to the lower transport frame as well as to the auxiliary element.

The lower transport frame and the upper transport frame may be formed identically. The transport frames may comprise or consist of metal, like steel. For example, the transport frames each comprise a plurality of metal profiles which are arranged in a framework. Each of the transport frames may comprise a support structure for supporting a portion of the wind turbine component. The support structure can be a flange which can be screwed to the component. Alternatively, the support structure may comprise a support area and a bracket between which the component can be clamped. The transport frames may be frames configured to transport the components for a wind turbine on a vehicle, like a ship.

The auxiliary element is placed horizontally next to the lower transport frame. These two elements form a pair on which the adapter element is arranged. A horizontal direction is herein understood as a direction parallel to the ground on which the transportation system stands. For example, the lower transport frame and the auxiliary element stand on a common mounting area and/or on the same (horizontal) level. The common mounting area may be formed by mounting templates or by another pair of a transport frame and an auxiliary element. For example, the lower transport frame and the auxiliary element have the same height measured in vertical direction. The lower transport frame and the auxiliary element may terminate on the same height above ground.

The auxiliary element may be configured to carry the same load or at least 80% of the load for which the lower transport frame is configured. A "horizontal distance" between the auxiliary element and the lower transport frame is, for example, at most 1 m or at most 50 cm or at most 10 cm and/or at least 1 cm. For example, the distance is 5 cm. The auxiliary element and the lower transport frame may be connected to each other by connection means which are different from the adapter element.

The adapter element is, in particular, a rigid element. It may comprise or may be formed of metal, like steel. The adapter element is, for example, fixedly connected to the upper transport frame by means of the first connection means, fixedly connected to the lower transport frame by means of the second connection means and fixedly connected to the auxiliary element by means of the third connection means.

The adapter element is placed onto the pair of the lower transport frame and the auxiliary element. For example, in top view, i.e. when viewed in vertical direction downwards, the adapter element partially or completely overlaps with or covers, respectively, the lower transport frame and the auxiliary element. "Vertical direction" is herein understood, in particular, as a direction perpendicular to the ground level on which the transportation system stands. Thus, the vertical direction may be parallel to the direction in which the gravitational force acts.

The adapter element may be connected to the lower transport frame and the auxiliary element such that it distributes the load from the upper transport frame equally to the lower transport frame and the auxiliary element. Particularly, a force acting on the upper transport frame vertically downwards towards the lower transport frame and the auxiliary element, like the weight of the upper transport frame, is distributed by the adapter element.

The transportation system may comprise two or more groups of an upper transport frame, a lower transport frame, an auxiliary element and an adapter element. For example, the transportation system comprises at least one such group for supporting the root ends of the components and at least one such group for supporting regions of the components closer to the tips of the components. Therefore, all features disclosed herein for one group of an upper transport frame, a lower transport frame, an auxiliary element and an adapter element vertically arranged between the upper transport frame and the pair of the lower transport frame and the auxiliary element are also disclosed for each further such group of the transportation system.

According to at least one embodiment, in a top view, e.g. when viewed in vertical direction downwards, the adapter element is H-shaped. Due to the H-shape, the adapter element can be formed to be stable but at the same time to be weight- and/or material-saving.

According to at least one embodiment, the adapter element further comprises two elongated outer sections which are separated from each other in a first lateral direction and which each extend mainly in a second lateral direction. The second lateral direction is perpendicular to the first lateral direction. Furthermore, the adapter element comprises an elongated intermediate section extending mainly in the first lateral direction. The outer sections are each connected to the intermediate section.

When arranged in the transportation system, the first and the second lateral directions are, for example, directions perpendicular to the vertical direction or are horizontal directions, respectively.

"Elongated" herein means that that the length of a section or an element measured along its main extension direction is greater than the width and the thickness of the section/element, for example at least two times or at least five times greater. For example, the two elongated outer sections and/or the intermediate section are each formed by a metal profile. The length of the intermediate section may be greater than the lengths of each of the outer sections.

A section or an element extending mainly in a certain direction herein means that a main extension direction of said section/element is parallel to the certain direction, or at least encloses an acute angle with the certain direction, e.g. of at most 30° or at most 10°.

According to at least one embodiment, one longitudinal end of the intermediate section is connected to one outer section and another longitudinal end, i.e. the opposite longitudinal end, of the intermediate section is connected to another outer section. For example, the intermediate element is welded to the two outer sections.

The longitudinal ends of the intermediate section may, in each case, be connected to the outer sections in central regions of the outer sections. "Central" herein means central with respect the length of a section/element. In other words, the longitudinal ends of the intermediate section may be connected to the outer sections at half the lengths of the outer sections.

With such an intermediate section and with those outer sections, the adapter element may have a H-shape when viewed in top view.

According to at least one embodiment, the first connection means are arranged at least partially, i.e. partially or completely, in central regions of the outer sections and at a top side of the adapter element. That is, each of the outer sections is assigned at least a part of the first connection means. The top side of the adapter element is the side which faces towards the upper transport frame.

According to at least one embodiment, the second and the third connection means are arranged at the bottom side of the adapter element opposite to the top side. The bottom side of the adapter element is the side which faces towards the lower transport frame and towards the auxiliary element.

According to at least one embodiment, the second connection means are arranged at least partially at first longitudinal ends of the outer sections. This means that at least a part of the second connection means is arranged at the first longitudinal ends. Another part of the second connection means may be arranged in the central regions of the outer sections.

According to at least one embodiment, the first longitudinal ends of the outer sections are arranged upstream of the intermediate section in the second lateral direction. That is, when moving along the second lateral direction, the first longitudinal ends lie in front of the intermediate section.

According to at least one embodiment, the third connection means are arranged at least partially at second longitudinal ends of the outer sections. This means that at least a part of the third connection means is arranged at the second longitudinal ends. Another part of the third connection means may be arranged in the central regions of the outer sections.

According to at least one embodiment, the second longitudinal ends of the outer sections are arranged downstream of the intermediate section in the second lateral direction. That is, when moving along the second lateral direction, the second longitudinal ends lie behind the intermediate section.

The adapter element may be formed mirror-symmetrically with respect to at least one symmetry plane. The at least one symmetry plane extends, for example, through the intermediate section. For instance, a symmetry plane extends parallel to the first lateral direction and perpendicular to the second lateral direction. Additionally or alternatively, a symmetry plane extends parallel to the second lateral direction and perpendicular to the first lateral direction.

According to at least one embodiment, the outer sections are arc-shaped. That is, the outer sections each follow an arc when one moves from the first longitudinal end to the second longitudinal end or vice versa. For example, each arc-shaped outer section has its maximum closer to the top side of the adapter element than to the bottom side of the adapter element. The maximum of the arc-shaped outer sections may, in each case, lie within the central region of the outer section.

According to at least one embodiment, the intermediate section is arc-shaped. That is, the intermediate section follows an arc when one moves from one longitudinal end to the other longitudinal end. The maximum of the arc-shaped intermediate section may be closer to the top side of the adapter element than to the bottom side of the adapter element. The maximum may lie within the central region of the intermediate section.

Arc-shaped sections allow to efficiently divert load from the top side towards the bottom side. They may also help to avoid collisions of frames.

According to at least one embodiment, the adapter element is connected to only one upper transport frame. Particularly, the adapter element comprises first connection means which enable a connection of the adapter element to only one upper transport frame and/or the adapter element comprises only so many first connection means that only one upper transport frame can be connected to the adapter element.

According to at least one embodiment, the upper transport frame overlaps with the lower transport frame and the auxiliary element when viewed in a top view. That is, in this top view, the upper transport frame covers at least a portion of the lower transport frame and at least a portion of the auxiliary element. For example, the upper transport frame is arranged centrally above the lower transport frame and the auxiliary element.

According to at least one embodiment, at least one of the first, the second and the third connection means comprises at least one protrusion inserted into a hole in the corresponding transport frame or in the corresponding auxiliary element, respectively.

For example, the first connection means comprise at least two or at least four such protrusions, each being inserted into a corresponding hole in the upper transport frame. All protrusions of the first connection means may be arranged in central regions of the outer sections. For example, at least two protrusions of the first connection means are assigned to one outer section and two further protrusions of the first connection means are assigned to the other outer section.

The second connection means may comprise at least two or at least four protrusions, each being inserted into a hole in the lower transport frame. For example, each outer section comprises at least one such protrusion of the second connection means at its first longitudinal end. Each outer section may comprise at least one protrusion of the second connection means in its central region.

Likewise, the third connection means may comprise at least two or at least four protrusions, each being inserted into a hole in the auxiliary element. For example each outer section comprises at least one of these protrusions of the third connection means at its second longitudinal end. Each outer section may comprise at least one protrusion of the third connection means in its central region.

According to at least one embodiment, at least one of the first, the second and the third connection means comprises a pocket in which a portion, e.g. a corner, of the corresponding transport frame or of the corresponding auxiliary element, respectively, is received.

For example, the first connection means comprise at least one pocket which is open towards the upper transport frame and which has a pocket wall laterally surrounding, at least partially, one or more protrusion(s) of the first connection means. The pocket wall may laterally surround a portion of the upper transport frame.

Likewise, the second and the third connection means may each comprise at least one pocket which is open towards the lower transport frame or the auxiliary element, respectively, and which each have a pocket wall laterally surrounding, at least partially, one or more protrusion(s) of the second or third connection means, respectively. The pocket wall may laterally surround a portion of the lower transport frame or the auxiliary element, respectively.

According to at least one embodiment, the auxiliary element is a further transport frame for a component for a wind turbine. The auxiliary element may be formed identically to the lower transport frame. Alternatively, the auxiliary element may be formed substantially identically to the lower transport frame with the difference that the lower transport frame comprises a support structure for being connected to and supporting the component, whereas the auxiliary element does not. The auxiliary element may be rotated compared to the lower transport frame, e.g. by 180°. The rotational axis may be parallel to the vertical direction. The rotation may prevent connection means of the transport frames from interfering with each other, which could prevent an arrangement with a small horizontal distance between the lower transport frame and the auxiliary element.

According to at least one embodiment, the auxiliary element is not directly connected to the component for the wind turbine, or not configured to be connected to the component. Thus, when the transportation system carries the components for the at least one wind turbine, the components are only directly connected to and supported by the lower and the upper transport frame, but not by the auxiliary element.

According to at least one embodiment, the transportation system further comprises a plurality, e.g. two or more, of the components for the at least one wind turbine. The components may be vertically stacked above each other. One component, also referred to as lower component, is connected to and supported by the lower transport frame. Another component, also referred to as upper component, is connected to and supported by the upper transport frame.

According to at least one embodiment, the transportation system is a rotor blade transportation system. Accordingly, the components are rotor blades.

According to at least one embodiment, the transportation system further comprises rotor blades stacked vertically above each other. Thereby, one of the rotor blades, herein also referred to as lower rotor blade, is connected to and supported by the lower transport frame and another rotor blade, herein also referred to as upper rotor blade, is connected to and supported by the upper transport frame.

According to at least one embodiment, the lower transport frame and the upper transport frame are both root transport frames, i.e. the transports frames are configured to be connected to and to support the components, particularly rotor blades, at their root ends.

According to at least one embodiment, the lower transport frame and the upper transport frame are both tip transport frames, i.e. the transport frames are configured to be connected to and to support the components, particularly rotor blades, at their tip ends or at least at regions closer to the tip end than to the root end.

According to at least one embodiment, the auxiliary element is arranged horizontally next to the lower transport frame in a direction parallel to a main extension direction of the component to be transported with the help of the lower transport frame. The main extension direction of the component is, for example, parallel to the second direction specified above.

In the case of the lower transport frame and the upper transport frame being root transport frames, the auxiliary element may be arranged downstream of the component with respect to the main extension direction of the component. That is, in top view, the component connected to the lower transport frame and supported thereby does not overlap with the auxiliary element. The component connected to and supported by the upper transport frame may be shifted towards the auxiliary element in the direction parallel to the main extension direction compared to the component connected to and supported by the lower transport frame. The upper component does not overlap with the auxiliary element then viewed in top view, for example.

In the case of the lower and upper transport frames being tip transport frames, the components connected to and supported by the upper and lower tip transport frames may overlap with the auxiliary element when viewed in top view.

According to at least one embodiment, the transportation system comprises two root transport frames stacked vertically above each other and forming an upper and a lower root transport frame. The transportation system further comprises two tip transport frames stacked vertically above each other and forming an upper and a lower tip transport frame. Furthermore, the transportation system comprises two auxiliary elements and two adapter elements. One auxiliary element is arranged horizontally next to the lower root transport frame and another auxiliary element is arranged horizontally next to the lower tip transport frame. A first one of the adapter elements is arranged vertically between the upper root transport frame and the pair of the lower transport frame and the auxiliary element placed horizontally next thereto. A second one of the adapter element is arranged vertically between the upper tip transport frame and the pair of the lower tip transport frame and the auxiliary element placed horizontally next thereto.

The auxiliary element that is placed horizontally next to the root transport frame may also be called "root auxiliary element". The auxiliary element that is placed horizontally next to the tip transport frame may also be called "tip auxiliary element". The adapter element that is placed vertically between the upper and the lower root transport frames may also be called "root adapter element". The adapter element that is placed vertically between the upper and the lower tip transport frames may also be called "tip adapter element".

Thus, the transportation system comprises two groups, namely a root group and a tip group, each having a lower transport frame, an upper transport frame, an auxiliary element and an adapter element. In each group, the adapter element is connected to the upper transport frame, the lower transport frame and the auxiliary element by means of corresponding first, second and third connection means and, in each group, the adapter element distributes a load from the upper transport frame to the lower transport frame and to the auxiliary element so that the load is diverted downwards via the lower transport frame and the auxiliary element.

The lower root transport frame and the lower tip transport frame may be separated from each other in horizontal direction by several meters. Likewise, the root auxiliary element and the tip auxiliary and/or the upper root transport frame and the upper tip transport frame may be separated from each other in horizontal direction by several meters.

According to at least one embodiment, the transportation system comprises at least three further transport frames for components for at least one wind turbine stacked vertically above the upper transport frame in order to enable the transportation of at least five components stacked vertically above each other. The at least three further transport frames may be stacked above the upper transport frame without using an auxiliary element and/or an adapter element for distributing a load. For example, each of these further transport frames may be stacked directly above the upper transport frame without any offset in a horizontal direction. The further transport frames may be formed identically to the lower and/or upper transport frame.

Next, the adapter element for a transportation system is specified. The adapter element may be the adapter element described in connection with the transportation system. Therefore, all features disclosed for the transportation system are also disclosed for the adapter element and vice versa.

In at least one embodiment, the adapter element for a transportation system comprises first connection means configured to connect the adapter element to an upper transport frame for a component for a wind turbine, second connection means configured to connect the adapter element to a lower transport frame for a component for a wind turbine and third connection means configured to connect the adapter element to an auxiliary element. The adapter element is configured to be placed onto and connected to a pair of a lower transport frame and an auxiliary element which is placed horizontally next to the lower transport frame with the help of the second and the third connection means. The adapter element is configured to be connected to an upper transport frame placed on the adapter element with the help of the first connection means so that the adapter element is arrangeable vertically between the upper transport frame and the pair of the lower transport frame and the auxiliary element. Furthermore, when the adapter element is in this arrangement, i.e. vertically between the upper transport frame and the pair, the adapter element is configured to distribute a load from the upper transport frame to the lower transport frame and to the auxiliary element so that the load is diverted downwards via the lower transport frame and the auxiliary element.

Next, the kit for a transportation system is specified. With this kit, the transportation system according to any of the embodiments specified herein may be built up. Therefore, all features disclosed for the transportation system are also disclosed for the kit and vice versa.

In at least one embodiment, the kit comprises a lower transport frame for a component for a wind turbine, an auxiliary element arrangeable horizontally next to the lower transport frame, an adapter element according to any one of the embodiments described herein and an upper transport frame for a component for a wind turbine.

The upper transport frame, the lower transport frame and the auxiliary element are, in particular, configured such that they can be connected to the adapter element with the help of the first, second and third connection means.

The kit may comprise two or more lower transport frames, two or more auxiliary elements, two or more adapter elements and two or more upper transport frames.

Next, the method for building up a transportation system is specified. With this method, the transportation system according to any of the embodiments described herein may be built up. Therefore, all features disclosed in connection with the transportation system are also disclosed for the method and vice versa.

In at least one embodiment, the method comprises a step of providing the kit according to any one of the embodiments described herein. The method further comprises steps of placing the lower transport frame and the auxiliary element onto a mounting area so that the lower transport frame and the auxiliary element are arranged horizontally next to each other. In a further step, the adapter element is placed onto the pair of the lower transport frame and the auxiliary element placed horizontally next to the lower transport frame. The adapter element is connected to the lower transport frame and to the auxiliary element with the help of the second and the third connection means. In a further step, the upper transport frame is placed onto the adapter element and the adapter element is connected to the upper transport frame with the help of the first connection means.

The mounting area may be realized by one or more templates. Alternatively, the mounting area may be realize by another pair of an auxiliary element and a lower transport frame.

Hereinafter, the transportation system for components for at least one wind turbine, the adapter element, the kit and the method for building up a transportation system will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figures 1 to 3 show a first exemplary embodiment of the adapter element,
Figures 4 to 6 show a second exemplary embodiment of the adapter element,
Figures 7 to 19 show different positions in an exemplary embodiment of the method for building up a transportation system as well as an exemplary embodiment of the transportation system,
Figures 20 and 21 show a further exemplary embodiment of the transportation system.

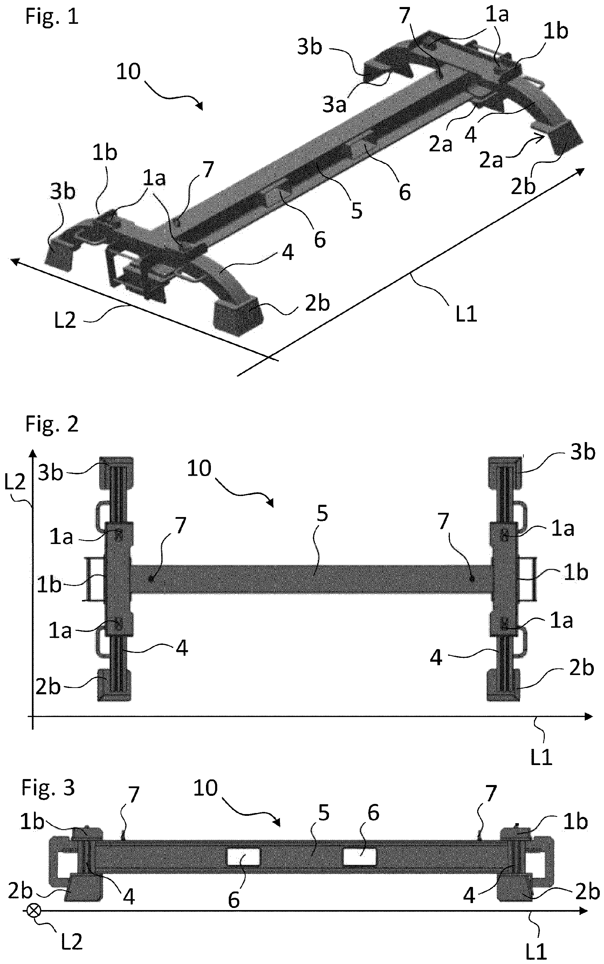

Figure 1 shows a perspective view of an exemplary embodiment of the adapter element 10. Figures 2 and 3 show a top view and a side view of the adapter element 10. The adapter element 10 is a root adapter element configured to connect root transport frames for rotor blades for a wind turbine.

The adapter element 10 comprises a longitudinal intermediate section 5 extending in a first lateral direction L1. The adapter element 10 further comprises two longitudinal outer sections 4 which mainly extend in a second lateral direction L2 which is perpendicular to the first lateral direction L1. The outer sections 4 are each arc-shaped.

The intermediate section 5 is connected with one longitudinal end to one outer section 4 and with the other longitudinal end to the other outer section 4. Holes or pockets 6 extend through the intermediate section 5. These holes/pockets 6 are configured to receive the fork of a forklift in order to enable transportation or mounting of the adapter element 10. At the top side of the adapter element 10, eyebolts 7 are located, which are configured to receive chain slings or polyester slings so that the adapter element 10 can be lifted with the help of a crane.

As can be seen in figure 1, the adapter element 10 comprises first connection means 1a, 1b at its top side. The first connection means comprise four protrusions 1a and two pockets 1b. The pockets 1b are open at the top and are laterally surrounded and delimited by pocket walls. On each outer section 4, one such pocket 1b and two protrusions 1a are arranged in a central region of the respective outer section 4. The protrusions 1a are each arranged inside the pockets 1b. The pockets 1b are configured to receive a portion of an upper transport frame and the protrusions 1a are configured to be inserted into holes in the upper transport frame.

On the bottom side of the adapter element 10 opposite to the top side, the adapter element 10 comprises second connection means 2a, 2b configured to connect the adapter element 10 to a lower transport frame. The second means 2a, 2b comprise pockets 2b which are open at the bottom and which are configured to receive the lower transport frame. Inside each pocket 2b, there is a protrusion 2a (not or hardly visible) configured to be inserted into a hole of the lower transport frame. The pockets 2b are arranged on first longitudinal ends of the outer sections 4.

Moreover, on the bottom side of the adapter element 10, the adapter element 10 comprises third connection means 3a, 3b configured to connect the adapter element 10 to an auxiliary element. The third connection means 3a, 3b are formed as the second connection means 2a, 2b but are partially arranged at second longitudinal ends of the outer sections 4 opposite to the first longitudinal ends.

Hardly visible, but still present, are protrusions 2a, 3a of the second and the third connection means in the central regions of the outer sections 4 at the bottom side of the adapter element 10. Also those protrusions 2a, 3a are configured to be inserted into holes of the lower transport frame and the auxiliary element, respectively.

As can be seen in figures 1 to 3, the adapter element 10 is formed symmetrically with respect to two mirror planes running through the intermediate section 5. One mirror plane extends parallel to the first lateral direction L1 and perpendicular to the second lateral direction L2. The other mirror plane extends parallel to the second lateral direction L2 and perpendicular to the first lateral direction L1.

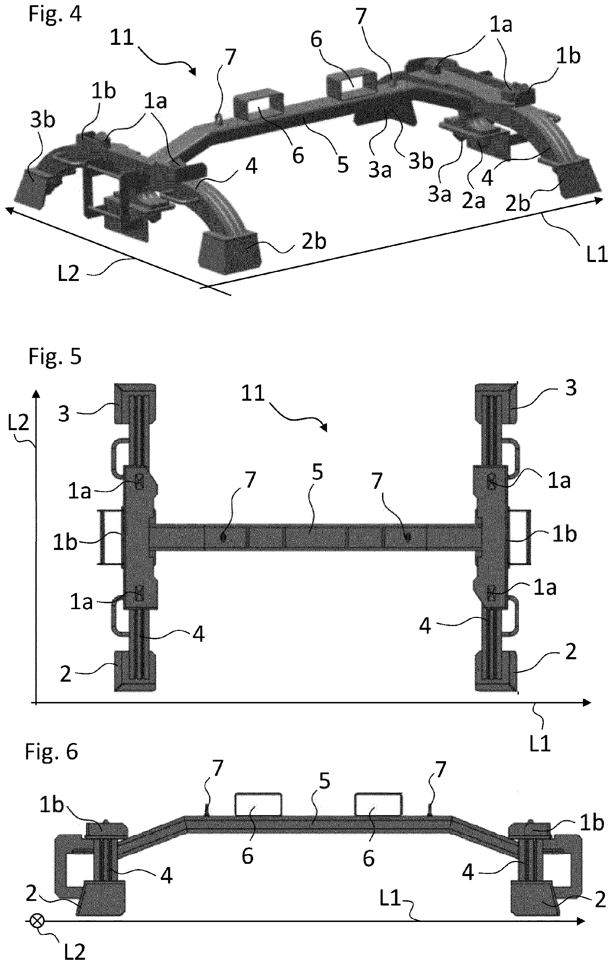

Figures 4 to 6 show a second exemplary embodiment of an adapter element 11. The adapter element 11 is a tip adapter element configured to connect tip transport frames for rotor blades. Figure 4 shows a perspective view, figure 5 shows a top view onto the top side of the adapter element 11 and figure 6 shows a side view.

The adapter element 11 is similar to the adapter element 10 described in connection with figures 1 to 3. In contrast to the adapter element 10 of figures 1 to 3, the intermediate section 5 is not straight but also arc-shaped. In the central region of the intermediate section 5, forklift hole/pockets are arranged on the intermediate section 5 at the top side.

In figure 4, the protrusions 3a in the pocket 3b of the third connection means can be seen. Furthermore, it can be seen that protrusions 2a, 3a of the second and the third connection means are arranged at the bottom side of the adapter element 11 in the central regions of the outer sections 4,.

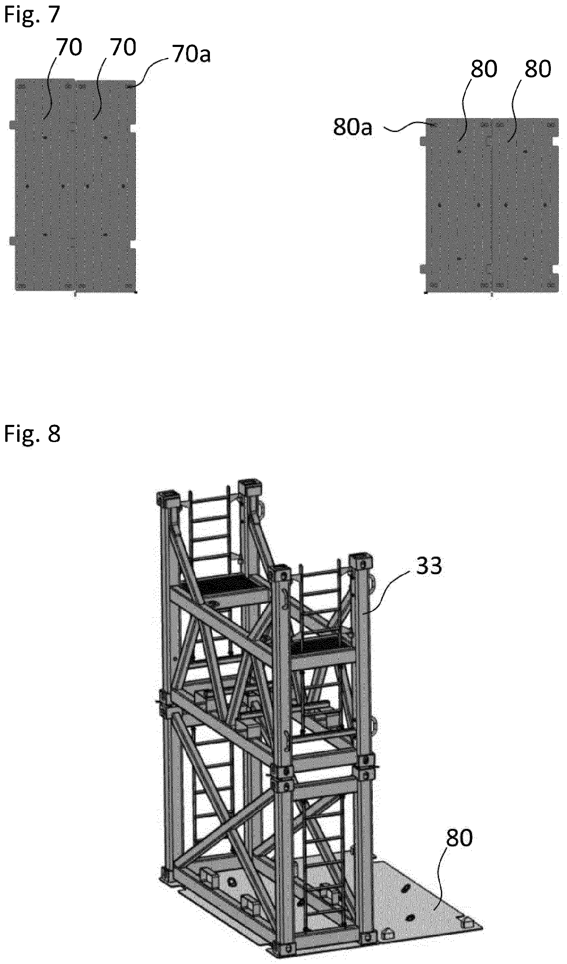

Figure 7 shows a first position in the method for building up a transportation system for components for at least one wind turbine. In this case, the components are rotor blades.

Figure 7 shows a top view onto ground. The ground is, for example, the load area of a ship. Mounting templates 70 and 80 are placed onto ground and form mounting areas 70, 80 for transport frames. The templates 70 are root templates and the templates 80 are tip templates. The templates 70, 80 comprise protrusions 70a, 80a projecting from the templates 70, 80 and being configured to be inserted into holes of the transport frames. This simplifies the positioning of the transport frames.

Figure 8 shows a second position in the method, in which an auxiliary element 33, namely a tip auxiliary element 33, is placed onto one of the tip templates 80. The auxiliary element 33 is a tip transport frame. The protrusions 80a of the tip template 80 are thereby inserted into holes in the auxiliary element 33.

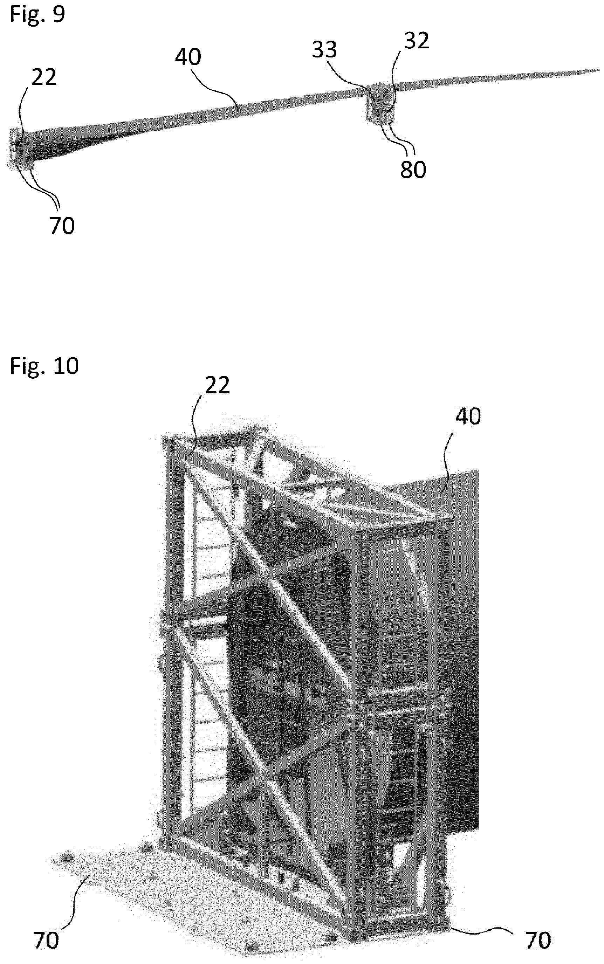

Figure 9 shows a third position in the method, in which a rotor blade 40 connected to and supported by a root transport frame 22 and a tip transport frame 32 is placed with the root transport frame 22 onto one of the root templates 70 and with the tip transport frame 32 onto the remaining tip template 80.

Figure 10 shows a detailed view of the root end of the rotor blade 40 with the root transport frame 22 mounted on one root template 70. The root transport frame 22 forms a lower root transport frame of the transportation system to be built. The root of the rotor blade 40 is screwed to the root transport frame 22.

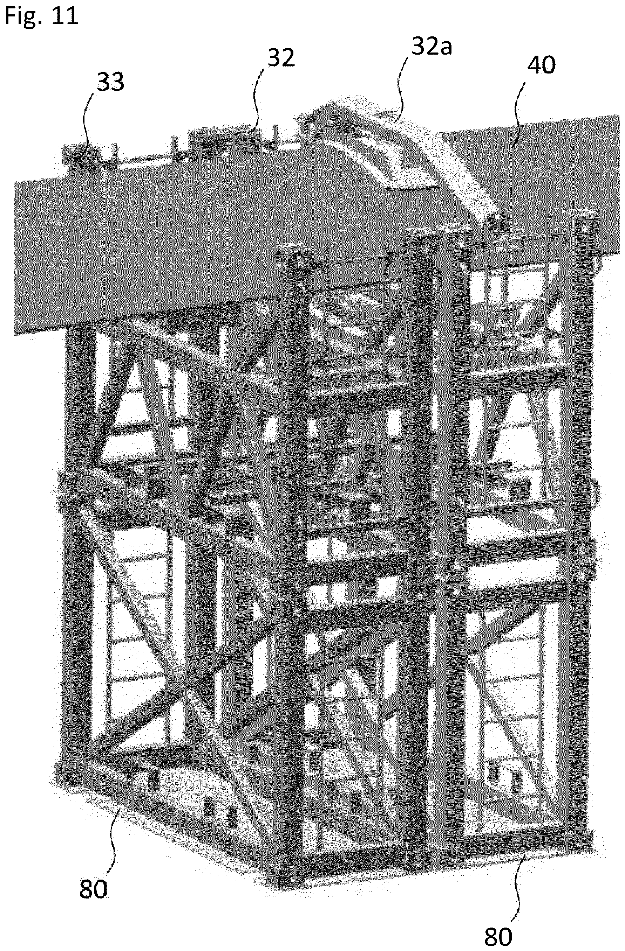

Figure 11 shows a detailed view of the tip transport frame 32 and the tip auxiliary element 33 placed onto the tip templates 80. The tip transport frame 32 forms a lower transport frame. As can be seen, the auxiliary element 33 is placed horizontally next to the transport frame 32 in a direction parallel to the main extension direction of the rotor blade 40. The rotor blade 40 is directly connected to and supported by the transport frame 32 but not by the auxiliary element 33. In order to safely connect the rotor blade 40 to the transport frame 32, a bracket 32a is used so that the rotor blade 40 is clamped between a support area of the transport frame 32 and the bracket 32a.

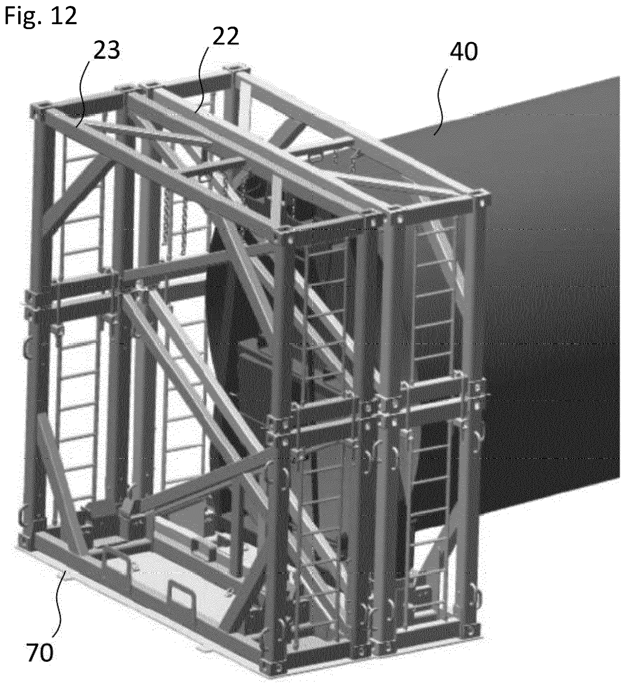

Figure 12 shows a fourth position in the method, in which an auxiliary element 23 is placed onto the remaining root template 70 horizontally next to the lower root transport frame 22. The auxiliary element 23 is a root auxiliary element 23. The auxiliary element 23 is a root transport frame identical to the root transport frame 22 supporting the root of the rotor blade 40. In the present case, however, the auxiliary element 23 is rotated compared to the transport frame 22.

The auxiliary element 23 is placed horizontally next to the root transport frame 22 in the direction parallel to the main extension direction of the rotor blade 40. Thereby, the auxiliary element 23 is neither directly connected to nor directly supports the rotor blade 40.

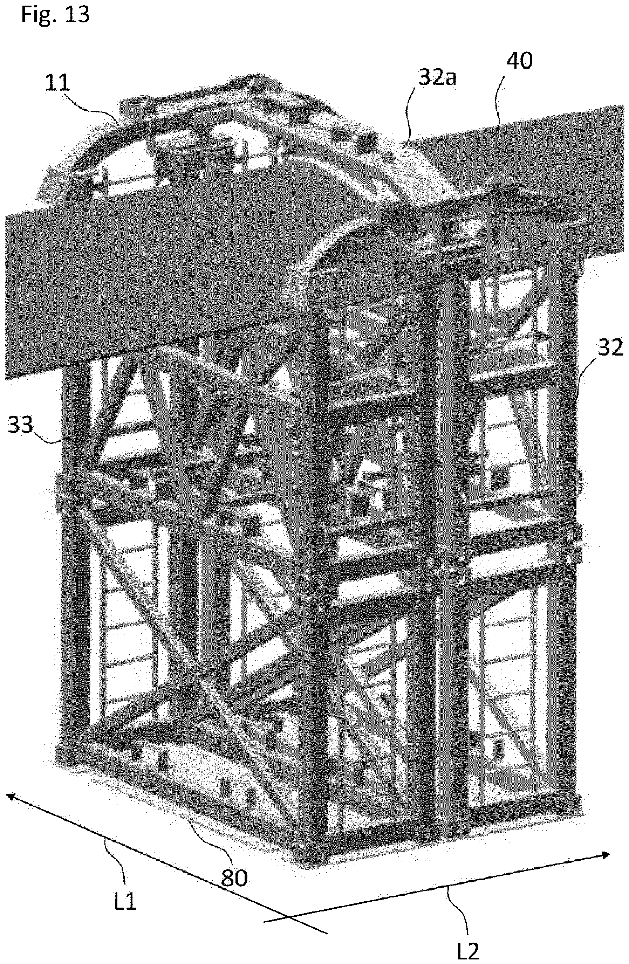

Figure 13 shows a position, in which the tip adapter element 11 of figures 4 to 6 is placed onto the pair of the lower tip transport frame 32 and the tip auxiliary element 33. The connection means 2a, 2b, 3a, 3b at the bottom side of the adapter element 11 thereby engage with the tip transport frame 32 and the auxiliary element 33 so that the adapter element 11 becomes safely connected thereto.

In this embodiment, the ratio of the height of the tip adapter element 11 to the height of the lower tip transport frame 32 is 0.19 with the heights being the extensions in vertical direction. The ratio of the width of the tip adapter element 11 to the width of the lower tip transport frame 32 is 1.07 with the widths being the extensions in the first lateral direction L1. The ratio of the depth of the tip adapter element 11 to the depth of the lower tip transport frame 32 is 2.14 with the depths being the extensions in the second lateral direction L2. In other embodiments, the mentioned ratios may vary from the specified values up to, for example, at most 20% or at most 10%.

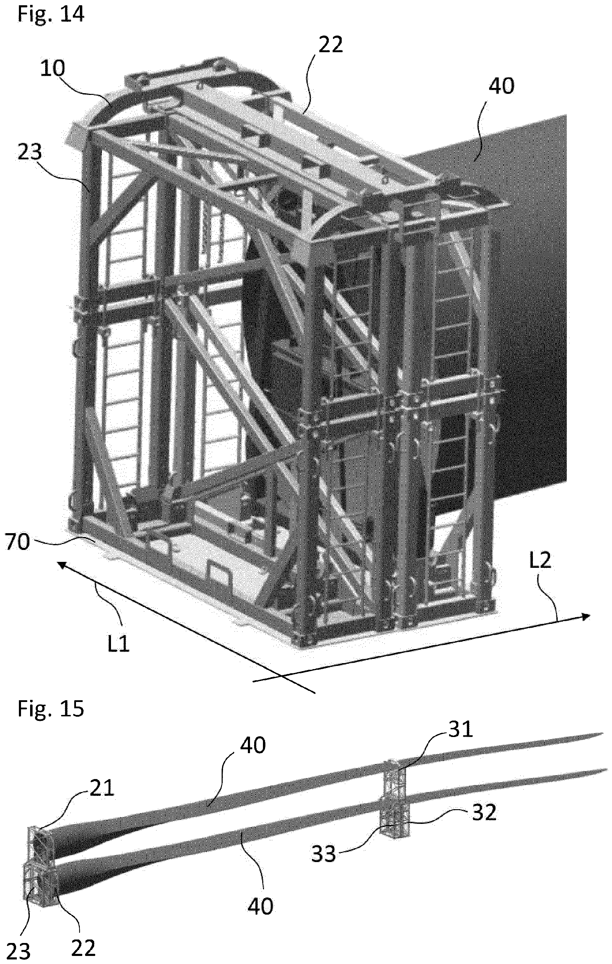

Figure 14 shows a further position in which the root adapter element 10 of figures 1 to 3 is placed onto the pair of the lower root transport frame 22 and the assigned root auxiliary element 23. Thereby, the connection means 2a, 2b, 3a, 3b at the bottom side of the adapter element 10 engage with the lower transport frame 22 and the auxiliary element 23 so that the adapter element 10 becomes safely connected thereto.

In this embodiment, the ratio of the height of the root adapter element 10 to the height of the lower root transport frame 22 is 0.15. The ratio of the width of the root adapter element 10 to the width of the lower root transport frame 22 is 1.04. The ratio of the depth of the root adapter element 10 to the depth of the lower root transport frame 22 is 2.01. In other embodiments, the mentioned ratios may vary from the specified values up to, for example, at most 20% or at most 10%.

Figure 15 shows a further position in the method, in which a second rotor blade 40 supported by and connected to a root transport frame 21 and a tip transport frame 31 is stacked onto the lower root transport frame 22 and the lower tip transport frame 32. In this way, an exemplary embodiment of the transportation system is realized.

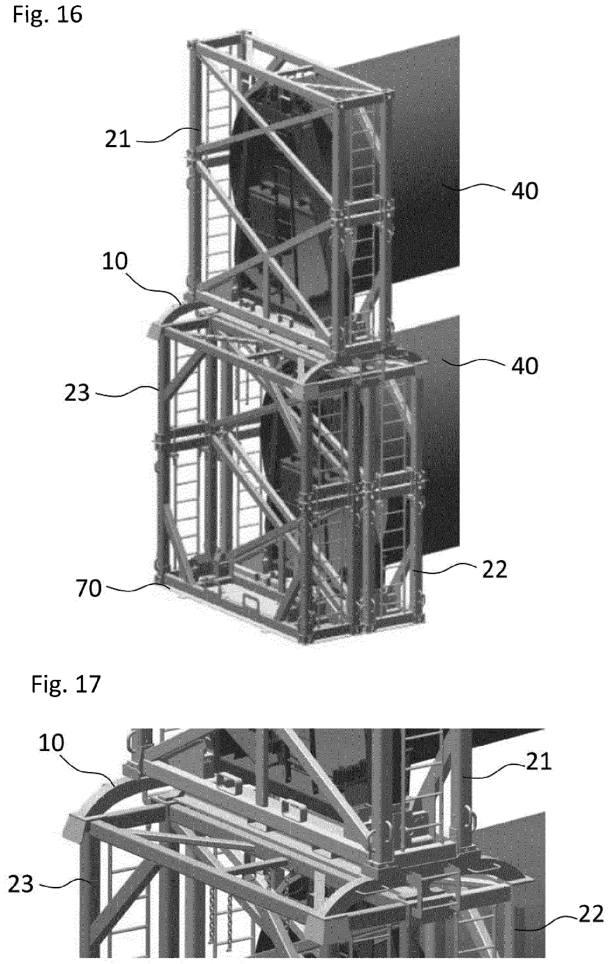

Figures 16 and 17 show detailed views of the root ends of the rotor blades 40. As can be seen, the root transport frame 21 is placed onto the adapter element 10 and connected to the adapter element 10 with the help of the first connection means 1a, 1b at the top side of the adapter element 10. The root transport frame 21 forms an upper root transport frame. It is arranged centrally above the auxiliary element 23 and the lower root transport frame 22 so that, in a top view, the upper root transport frame 21 overlaps with both the lower root transport frame 22 and the auxiliary element 23. As a consequence of this, the upper rotor blade 40 is slightly shifted towards the auxiliary element 23 compared to the lower rotor blade 40. In this embodiment, the ratio of the sum of the depth of the lower root transport frame 22, the depth of the auxiliary element 23 and the distance between the lower tip transport frame 22 and the auxiliary element 23 to the depth of the upper root transport frame 21 is 2.04. In other embodiments, the mentioned ratio may vary from the specified value up to, for example, at most 20% or at most 10%.

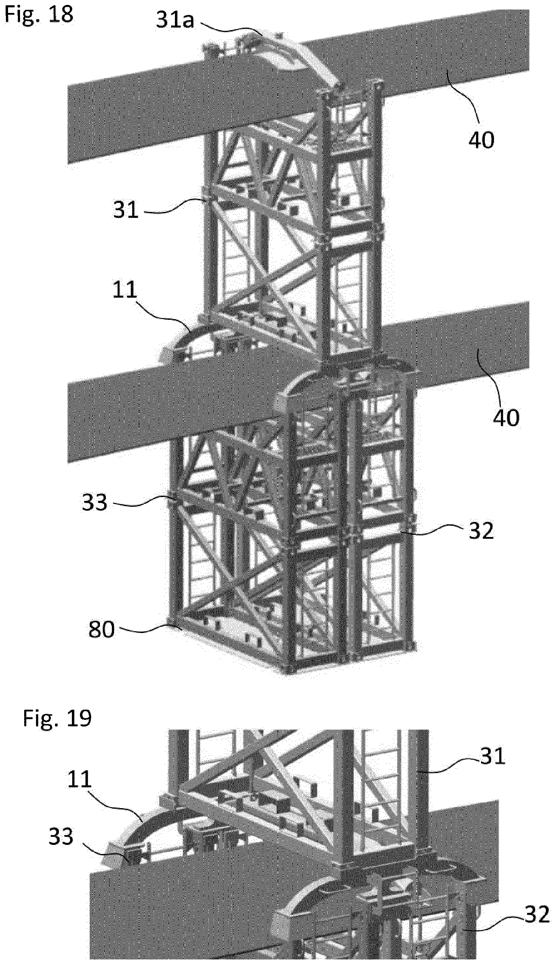

Figures 18 and 19 show detailed views of the tip transport frames. The tip transport frame 31 is placed onto the adapter element 11 and connected thereto with the help of the first connection means 1a, 1b at the top side of the adapter element 11. The tip transport frame 31 forms an upper tip transport frame and is arranged centrally above the auxiliary element 33 and the lower tip transport frame 32. In this embodiment, the ratio of the sum of the depth of the lower tip transport frame 32, the depth of the auxiliary element 33 and the distance between the lower tip transport frame 32 and the auxiliary element 33 to the depth of the upper tip transport frame 31 is 2.05. In other embodiments, the mentioned ratio may vary from the specified value up to, for example, at most 20% or at most 10%.

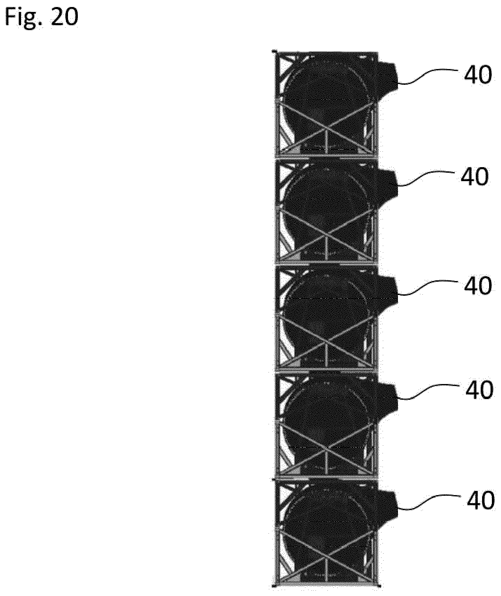

Figure 20 shows a position in which three further rotor blades 40 supported by and connected to transport frames are stacked onto the lower and the upper transport frames described before. In this way, a transportation system with five rotor blades vertically stacked above each other is realized. This is possible, in particular, due to the auxiliary elements and the adapter elements since the adapter elements distribute a load from the upper transport frames to the auxiliary elements and the lower transport frames. Thus, the lower transport frames are partially relieved.

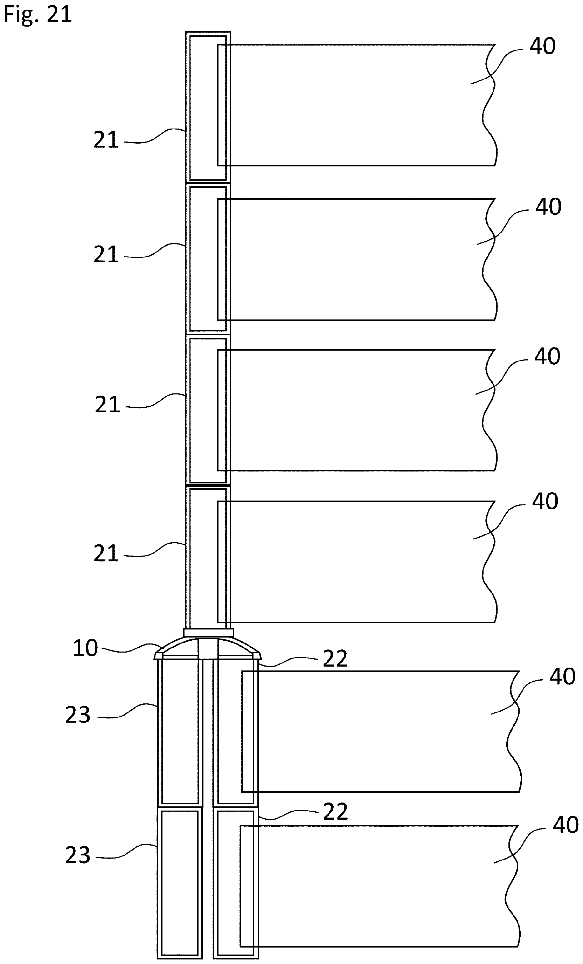

Figure 21 shows an exemplary embodiment of a transportation system (only the root transport frames are shown) with the help of which six rotor blades 40 stacked vertically above each other are transportable. The transportation system comprises a first pair of a lower transport frame 22 and an auxiliary element 23. A second pair of lower transport frame 22 and an auxiliary element 23 is placed directly onto the first pair. The (root) adapter element 10 is placed directly onto the second pair and connected thereto. A first upper root frame 21 is placed directly on the adapter element 10 and connected thereto. Three further upper transport frames 21 are stacked above the first upper transport frame 21.

The transportation system may comprise the corresponding arrangement of tip transport frames.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1a: first connection means / protrusion
- 1b: first connection means / pocket
- 2a: second connection means / protrusion
- 2b: second connection means / pocket
- 3a: third connection means / protrusion
- 3b: third connection means / pocket
- 4: outer section
- 5: intermediate section
- 6: hole / pocket
- 7: eyebolt
- 10: (root) adapter element
- 11: (tip) adapter element
- 21: upper (root) transport frame
- 22: lower (root) transport frame
- 23: (root) auxiliary element
- 31: upper (tip) transport frame
- 32: lower (tip) transport frame
- 33: (tip) auxiliary element
- 40: component for a wind turbine / rotor blade
- L1: first longitudinal direction
- L2: second longitudinal direction

## Claims

1. Transportation system for components (40) for at least one wind turbine comprising
- a lower transport frame (22, 32) for a component (40) for a wind turbine,
- an auxiliary element (23, 33) placed horizontally next to the lower transport frame (22, 32),
- an adapter element (10, 11) placed onto the pair of the lower transport frame (22, 32) and the auxiliary element (23, 33),
- an upper transport frame (21, 31) for a component (40) for a wind turbine placed onto the adapter element (10, 11) so that the adapter element (10, 11) is arranged vertically between the upper transport frame (21, 31) and the pair of the lower transport frame (22, 32) and the auxiliary element (23, 33), wherein
- the adapter element (10, 11) comprises first connection means (1a, 1b) with the help of which it is connected to the upper transport frame (21, 31),
- the adapter element (10, 11) comprises second connection means (2a, 2b) with the help of which it is connected to the lower transport frame (22, 32),
- the adapter element (10, 11) comprises third connection means (3a, 3b) with the help of which it is connected to the auxiliary element (23, 33),
- the adapter element (10, 11) distributes a load from the upper transport frame (21, 31) to the lower transport frame (22, 32) and to the auxiliary element (23, 33) so that the load is diverted downwards via the lower transport frame (22, 32) and the auxiliary element (23, 33).

2. Transportation system according to claim 1, wherein
- in a top view, the adapter element (10, 11) is H-shaped.

3. Transportation system according to claim 1 or 2, wherein the adapter element (10, 11) further comprises
- two elongated outer sections (4) separated from each other in a first lateral direction (L1) and each extending mainly in a second lateral direction (L2) which is perpendicular to the first lateral direction (L1),
- an elongated intermediate section (5) extending mainly in the first lateral direction (L1), wherein
- one longitudinal end of the intermediate section (5) is connected to one outer section (4) and another longitudinal end of the intermediate section (5) is connected to another outer section (4),
- the first connection means (1a, 1b) are arranged at least partially in central regions of the outer sections (4) and at a top side of the adapter element (10, 11),
- the second (2a, 2b) and the third (3a, 3b) connection means are arranged at a bottom side of the adapter element (10, 11) opposite to the top side,
- the second connection means (2a, 2b) are arranged at least partially at first longitudinal ends of the outer sections (4), wherein, in the second lateral direction (L2), the first longitudinal ends are arranged upstream of the intermediate section (5),
- the third connection means (3a, 3b) are at least partially arranged at second longitudinal ends of the outer sections (4), wherein, in the second lateral direction (L2), the second longitudinal ends are arranged downstream of the intermediate section (5).

4. Transportation system according to claim 3, wherein
- the outer sections (4) are arc-shaped.

5. Transportation system according to any one of the preceding claims, wherein
- the adapter element (10, 11) is connected to only one upper transport frame (21, 31),
- the upper transport frame (21, 31) overlaps with the lower transport frame (22, 32) and the auxiliary element (23, 33) when viewed in a top view.

6. Transportation system according to any one of the preceding claims, wherein
- at least one of the first (1a, 1b), the second (2a, 2b) and the third (3a, 3b) connection means comprises at least one protrusion (1a, 2a, 3a) inserted into a hole in the corresponding transport frame (21, 31, 22, 32) or in the corresponding auxiliary element (23, 33), respectively.

7. Transportation system according to any one of the preceding claims, wherein
- at least one of the first (1a, 1b), the second (2a, 2b) and the third (3a, 3b) connection means comprises a pocket (1b, 2b, 3b) in which a portion of the corresponding transport frame (21, 31, 22, 32) or of the corresponding auxiliary element (23, 33), respectively, is received.

8. Transportation system according to any one of the preceding claims, wherein
- the auxiliary element (23, 33) is a further transport frame for a component for a wind turbine.

9. Transportation system according to any one of the preceding claims, wherein
- the transportation system is a rotor blade transportation system and the components (40) are rotor blades (40), the transportation system further comprising
- rotor blades (40) stacked vertically above each other, wherein
- one of the rotor blades (40) is connected to and supported by the lower transport frame (22, 32), and
- another rotor blade (40) is connected to and supported by the upper transport frame (21, 31).

10. Transportation system according to any one of the preceding claims, wherein
- the auxiliary element (23, 33) is arranged horizontally next to the lower transport frame (22, 32) in a direction parallel to a main extension direction of the component (40) to be transported with the help of the lower transport frame (22, 32).

11. Transportation system according to any one of the preceding claims, comprising
- two root transport frames (21, 22) stacked vertically above each other and forming an upper (21) and a lower (22) root transport frame,
- two tip transport frames (31, 32) stacked vertically above each other and forming an upper (31) and a lower (32) tip transport frame,
- two auxiliary elements (23, 33),
- two adapter elements (10, 11), wherein
- one auxiliary element (23) is arranged horizontally next to the lower root transport frame (22) and another auxiliary element (33) is arranged horizontally next to the lower tip transport frame (32),
- a first one of the adapter elements (10) is arranged vertically between the upper root transport frame (21) and the pair of the lower root transport frame (22) and the auxiliary element (23) placed horizontally next thereto,
- a second one of the adapter elements (11) is arranged vertically between the upper tip transport frame (31) and the pair of the lower tip transport frame (32) and the auxiliary element (33) placed horizontally next thereto.

12. Transportation system according to any one of the preceding claims, wherein
- at least three further transport frames for components (40) for at least one wind turbine are stacked vertically above the upper transport frame (21, 31) in order to enable the transportation of at least five components (40) stacked vertically above each other.

13. Adapter element (10, 11) for a transportation system comprising
- first connection means (1a, 1b) configured to connect the adapter element (10, 11) to an upper transport frame (21, 31) for a component for a wind turbine,
- second connection means (2a, 2b) configured to connect the adapter element (10, 11) to a lower transport frame (22, 32) for a component for a wind turbine,
- third connection means (3a, 3b) configured to connect the adapter element (10, 11) to an auxiliary element (23, 33), wherein
- the adapter element (10, 11) is configured to
- be placed onto and connected to a pair of a lower transport frame (22, 32) and an auxiliary element (23, 33) which is placed horizontally next to the lower transport frame (22, 32) with the help of the second (2a, 2b) and the third (3a, 3b) connection means,
- be connected to an upper transport frame (21, 31) placed on the adapter element (10, 11) with the help of the first connection means (1a, 1b) so that the adapter element (10, 11) is arrangeable vertically between the upper transport frame (21, 31) and the pair of the lower transport frame (22, 32) and the auxiliary element (23, 33), and, in this arrangement,
- distribute a load from the upper transport frame (21, 31) to the lower transport frame (22, 23) and to the auxiliary element (23, 33) so that the load is diverted downwards via the lower transport frame (22, 32) and the auxiliary element (23, 33).

14. Kit for a transportation system comprising
- a lower transport frame (22, 32) for a component (40) for a wind turbine,
- an auxiliary element (23, 33) arrangeable horizontally next to the lower transport frame (22, 32),
- an adapter element (10, 11) according to claim 13,
- an upper transport frame (21, 31) for a component (40) for a wind turbine.

15. Method for building up a transportation system, comprising
- providing the kit according to claim 14,
- placing the lower transport frame (22, 32) and the auxiliary element (23, 33) onto a mounting area (70, 80) so that the lower transport frame (22, 32) and the auxiliary element (23, 33) are arranged horizontally next to each other,
- placing the adapter element (10, 11) onto the pair of the lower transport frame (22, 32) and the auxiliary element (23, 33) placed horizontally next thereto and connecting the adapter element (10, 11) to the lower transport frame (22, 32) and the auxiliary element (23, 33) with the help of the second (2a, 2b) and third (3a, 3b) connection means,
- placing the upper transport frame (21, 31) onto the adapter element (10, 11) and connecting the adapter element (10, 11) to the upper transport frame (21, 31) with the help of the first connection means (1a, lb).
